(19) Europäisches Patentamt / European Patent Office / Office européen des brevets

(11) **EP 3 562 704 B1**

(12) **FASCICULE DE BREVET EUROPEEN**

(45) Date de publication et mention de la délivrance du brevet:
**07.12.2022 Bulletin 2022/49**

(21) Numéro de dépôt: **17828950.0**

(22) Date de dépôt: **18.12.2017**

(51) Classification Internationale des Brevets (IPC):
**B60L 58/22** (2019.01)

(52) Classification Coopérative des Brevets (CPC):
**B60L 15/32; B60L 7/10; B60L 58/13; B60L 58/22;**
B60L 2200/26; B60L 2200/28; B60L 2220/42;
B60L 2260/52; B60L 2260/54; Y02T 10/64;
Y02T 10/70

(86) Numéro de dépôt international:
**PCT/FR2017/053630**

(87) Numéro de publication internationale:
**WO 2018/122492 (05.07.2018 Gazette 2018/27)**

(54) **PROCÉDÉ ET SYSTÈME DE GESTION DE LA CHARGE DE MODULES DE STOCKAGE D'ÉNERGIE ÉLECTRIQUE EMPLOYÉS DANS UN SYSTÈME DE TRANSPORT À ÉNERGIE ÉLECTRIQUE**

VERFAHREN UND SYSTEM ZUM VERWALTEN DES LADEVORGANGS VON MODULEN ZUM SPEICHERN ELEKTRISCHER ENERGIE, WOBEI DIE MODULE IN EINEM ELEKTRISCH ANGETRIEBENEN TRANSPORTSYSTEM VERWENDET WERDEN

METHOD AND SYSTEM FOR MANAGING THE CHARGING OF MODULES FOR STORING ELECTRICAL POWER, SAID MODULES BEING EMPLOYED IN AN ELECTRICALLY POWERED TRANSPORT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2016 FR 1663445**

(43) Date de publication de la demande:
**06.11.2019 Bulletin 2019/45**

(73) Titulaires:
• **Commissariat à l'Energie Atomique et aux Energies Alternatives**
**75015 Paris (FR)**
• **Metalliance**
**71230 Saint Vallier (FR)**

(72) Inventeurs:
• **LOPEZ, Yan**
**38140 Renage (FR)**
• **DUBREUILLE, Patrick**
**34070 Montpellier (FR)**
• **FRANCHI, Romain**
**38000 Grenoble (FR)**
• **MENIERE, Frédéric**
**69007 Lyon (FR)**
• **PHLIPPOTEAU, Vincent**
**38000 Grenoble (FR)**

(74) Mandataire: **INNOV-GROUP**
**310, avenue Berthelot**
**69372 Lyon Cedex 08 (FR)**

(56) Documents cités:
**US-A1- 2015 251 648**

## Description

## Domaine technique de l'invention

La présente invention se rapporte à un procédé de gestion de la charge d'un module de stockage d'énergie électrique employé notamment dans un système de transport à énergie électrique et à un système de gestion de la charge électrique d'un module de stockage d'énergie électrique employé dans le système de transport à énergie électrique.

## Etat de la technique

On distingue aujourd'hui différentes solutions d'entraînement d'un système de transport. Une première solution classique consiste à employer des moteurs thermiques, à énergie fossile ou gazeuse. Une deuxième solution apparue plus récemment consiste à employer un système hybride dans lequel un moteur thermique est associé à un moteur électrique, un dispositif permettant de gérer le passage de l'un à l'autre. Enfin, une troisième solution consiste à employer un système entièrement électrique, comportant un ou plusieurs moteurs électriques alimentés par des batteries.

Il s'avère que les solutions d'entraînement qui utilisent uniquement des moteurs électriques alimentés par batteries présentent des avantages dans certaines applications. C'est le cas notamment dans les systèmes de transport à plusieurs véhicules, appelés train de véhicules et employés pour le transport de charge dans la construction d'infrastructures. C'est le cas par exemple des infrastructures telles que des tunnels dont la formation s'allonge au fur et à mesure de l'avancement des travaux. Pour de telles infrastructures, il est en effet important de disposer d'une solution parfaitement autonome en énergie et qui n'engendre pas de pollution directe comme les solutions thermiques ou hybrides. La demande de brevet FR3024703A1 décrit une telle solution de système de transport à énergie électrique.

Cette demande de brevet décrit notamment un système qui se compose d'un train de plusieurs véhicules accrochés les uns aux autres et incluant un véhicule de tête et un véhicule de queue dotés chacun d'une cabine de conduite pour pouvoir déplacer le système dans les deux sens, sans avoir à faire un demi-tour. Chaque véhicule est entraîné par son propre ensemble d'entraînement électrique. Chaque ensemble d'entraînement électrique comporte au moins un moteur électrique destiné à entraîner des roues du véhicule, un convertisseur pour contrôler le moteur électrique et un module de stockage d'énergie électrique permettant d'alimenter le moteur en énergie électrique.

Même si les solutions entièrement électriques présentent certains avantages, elles nécessitent une gestion appropriée des modules de stockage d'énergie électrique employés.

Un module de stockage d'énergie électrique comporte couramment plusieurs cellules élémentaires de stockage d'énergie électrique associés en série et/ou parallèle, pour constituer la tension et/ou la capacité totale d'alimentation. Un exemple de gestion à effectuer sur un module consiste à assurer de temps en temps. un équilibrage en tension de ces cellules. En effet, au fil du temps et des utilisations, et à cause des imperfections des cellules du module, des différences d'état de charge se créent entre les cellules. Si rien n'est fait pour équilibrer les états de charge des cellules d'un module, l'énergie électrique stockée dans le module ne peut pas être exploitée dans sa totalité. En effet, la tension d'une cellule va limiter la charge tandis que la tension d'une autre cellule va limiter la décharge. Ou, autrement dit, la charge du module est stoppée dès qu'au moins une cellule est complètement chargée et le module est déchargé dès qu'au moins une cellule est complètement déchargée. Les déséquilibres en tension entre cellules limitent donc l'utilisation de la batterie. Il est donc nécessaire de procéder à un équilibrage en tension régulier des cellules élémentaires d'un module de manière à conserver des performances optimales.

Pour certaines technologies de batterie, comme les batteries de type Lithium-Fer-Phosphate (LiFePO4), l'équilibrage en tension doit se faire lorsque le système de transport est à l'arrêt et en fin de charge du module. Or cette séquence d'équilibrage est réalisée à faible courant et s'avère particulièrement lente, augmentant donc la durée totale de charge d'un module.

Par ailleurs, des solutions actuelles permettent de récupérer de l'énergie électrique dans les modules de stockage par freinage régénératif du système de transport. Mais une telle solution ne peut être mise en œuvre que si le module de stockage n'est pas chargé complètement.

Le document US2015/0251648A1 décrit pour sa part une solution de commande d'un véhicule hybride. La solution s'applique notamment pour un système à un véhicule ou plusieurs véhicules reliés entre eux. Une unité de commande centrale permet de générer des commandes (Pe_ref et Pc_ref) à destination respectivement d'un moteur thermique et d'une unité de contrôle destinée à commander un convertisseur.

La batterie est chargée, soit par la puissance fournie par le générateur auquel est relié le moteur thermique, soit par une puissance provenant du freinage du moteur électrique. L'unité de commande centrale détermine notamment un état de charge cible (SOC_ref) à partir de données de profil de parcours définies dans le bloc "Elevation map". L'unité de commande centrale exécute ensuite un algorithme pour déterminer la mise en route ou non du moteur thermique pour charger ou non la batterie, en tenant compte de l'état de charge en cours de la batterie et de l'état de charge cible pour effectuer le trajet.

Cette solution antérieure n'a pas pour objectif de gérer la charge de plusieurs modules inclus dans des ensembles d'entraînement différents utilisés dans un même système de transport. Elle a pour but de gérer le fonctionnement d'un seul ensemble d'entraînement, cet ensemble d'entraînement comprenant une batterie, un moteur électrique et un moteur thermique permettant de recharger la batterie lorsque l'état de charge de la batterie est jugé trop faible pour réaliser le parcours prévu.

Il existe donc un besoin d'une gestion appropriée de la charge de plusieurs modules de stockage d'un système de transport afin de permettre de bénéficier des solutions de récupération d'énergie mais aussi de répondre à la nécessité de mise en œuvre de certaines fonctions de gestion sur chaque module, telle que par exemple une fonction de type équilibrage en tension des cellules du module.

Le but de l'invention est donc de proposer une solution pour répondre à ce besoin.

## Exposé de l'invention

Ce but est atteint par un procédé de gestion de la charge électrique de plusieurs modules de stockage d'énergie électrique employés dans un système de transport à énergie électrique destiné à effectuer un parcours, ledit système de transport comportant les caractéristiques de la revendication 1.

L'invention concerne également un système de transport comportant les caractéristiques de la revendication 11.

## Brève description des figures

D'autres caractéristiques et avantages vont apparaître dans la description détaillée qui suit faite en regard des dessins annexés dans lesquels :

- La figure 1 représente, de manière schématique, un système de transport tel qu'employé dans le cadre de l'invention ;
- La figure 2 représente, de manière schématique, un véhicule employé dans ledit système de transport ;
- La figure 3 représente, de manière schématique, un ensemble d'entraînement employé dans un système de transport ;
- La figure 4 représente, de manière schématique, une variante de réalisation de l'ensemble d'entraînement représenté en figure 3 ;
- La figure 5 représente le circuit d'alimentation d'un auxiliaire, réalisé à l'aide des modules de stockage employés dans les ensembles d'entraînement tels que représentés sur la figure 4 ;
- La figure 6 représente, de manière schématique, une architecture possible employée dans un système de transport ;
- La figure 7 illustre un cas d'application d'un système de transport ;
- La figure 8 représente de manière schématique le principe de gestion de la charge, appliqué aux modules de stockage d'énergie électrique d'un système de transport ;
- La figure 9 représente un diagramme fonctionnel illustrant de manière schématique un procédé de gestion de la charge employé dans l'invention ;

## Description détaillée d'au moins un mode de réalisation

L'invention est notamment employée dans le domaine des systèmes de transport à énergie électrique, c'est-à-dire tractés entièrement par une énergie électrique fournie par des batteries. L'invention s'applique plus particulièrement au procédé et système de gestion de la charge des modules de stockage d'énergie électrique employés pour l'entraînement d'un tel système de transport 1.

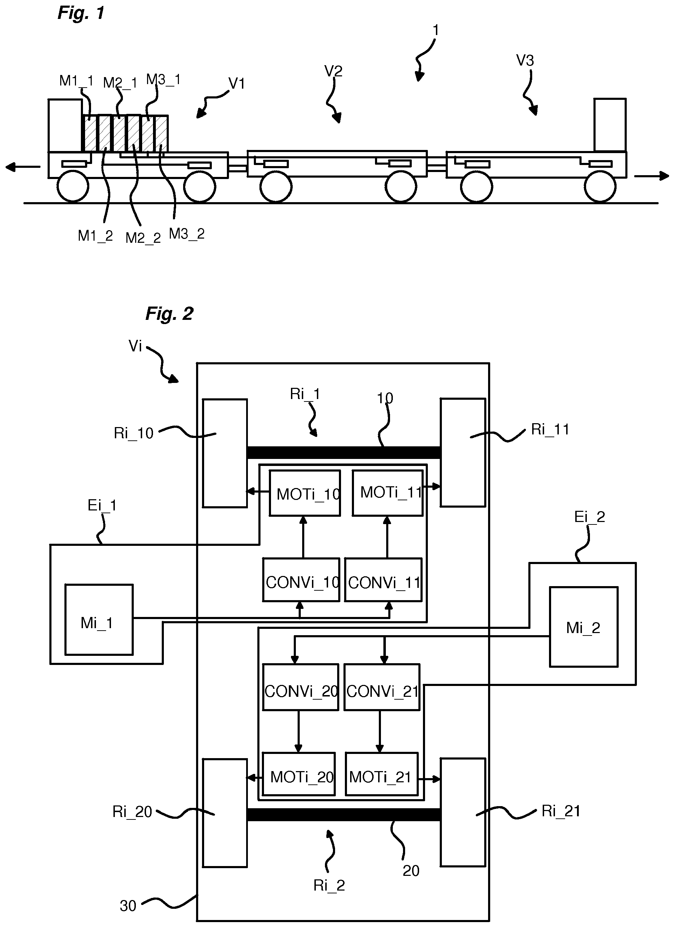

De manière non limitative, on considérera un système de transport de type train de véhicules, employé notamment pour transporter des charges lors de la construction d'infrastructures, telles que par exemple des tunnels. Un tel système 1 est représenté sur la figure 1.

Ci-dessous, de manière générale, pour les différents éléments du système de transport 1 on utilisera les références suivantes :

- Ei_X pour les ensembles d'entraînement ;
- Mi_X pour les modules de stockage d'énergie électrique,
- U_Mi_X pour les unités de gestion d'énergie électrique,
- MOTi_Y pour les moteurs électriques ;
- CONVi_Y pour les convertisseurs ;
- Ri_X pour les ensembles de roulement ;
- Ri_Y pour les roues ;

Avec X=1 ou 2 et Y=10 ou 11 ou 20 ou 21.

Ce type de système 1 comporte des moyens de roulement, tels que des roues coopérant avec des rails ou avec le sol directement.

De manière non limitative, on considère que le système comporte un nombre n de véhicules Vi, avec i allant de 1 à n et n supérieur ou égal à 1. Les véhicules sont accrochés entre eux par une liaison mécanique.

Le système est par exemple de type bicabine, c'est-à-dire qu'il comporte une première cabine de conduite dans le véhicule de tête (V1 sur la figure 1) et une deuxième cabine de conduite dans le véhicule de queue (V3 sur la figure 1). Cette solution permet au système d'aller dans un sens ou dans l'autre, sans faire demi-tour, ceci étant nécessaire lors de la construction d'une infrastructure telle qu'un tunnel.

Pour la suite de la description, en référence à la figure 2, de manière non limitative, chaque véhicule Vi du système comporte un châssis 30 et au moins deux ensembles de roulement Ri_1, Ri_2, permettant de faire rouler le véhicule. Chaque ensemble de roulement Ri_1, Ri_2 comporte avantageusement deux roues (référencées Ri_10, Ri_11 pour le premier ensemble de roulement et Ri_20, Ri_21 pour le deuxième ensemble de roulement) reliées entre elles par un essieu 10, 20. Le système comporte ainsi 2n ensembles de roulement Ri_1, Ri_2, avec i allant de 1 à n et n supérieur ou égal à 1. Chaque essieu peut présenter une fonction directionnelle permettant au véhicule Vi de s'orienter de manière adaptée sur son parcours.

Selon un aspect de l'invention, dans chaque véhicule Vi, chaque ensemble de roulement Ri_1, Ri_2 est entraîné en rotation par un ensemble d'entraînement Ei_1, Ei_2 électrique distinct. Le système comporte ainsi 2n ensembles d'entraînement, n étant supérieur ou égal à 1.

De manière non limitative, chaque ensemble d'entraînement comporte :

- Au moins un moteur électrique chargé d'entraîner l'ensemble de roulement en rotation ;
- Au moins un convertisseur de tension pour commander chaque moteur électrique ;
- Un module de stockage d'énergie électrique.

De manière non limitative mais avantageuse, en référence aux figures 2 à 4, chaque ensemble d'entraînement comportera :

- Deux moteurs électriques (MOTi_10, MOTi_11 pour l'ensemble d'entraînement Ei_1 et MOTi_20, MOTi_21 pour l'ensemble d'entraînement Ei_2), un moteur électrique distinct étant associé à chaque roue de l'ensemble de roulement ;
- Deux convertisseurs distincts (CONVi_10, CONVi_11 et CONVi_20, CONVi_21), destinés chacun à la commande d'un moteur distinct de l'ensemble d'entraînement ;
- Un module de stockage d'énergie électrique Mi_1, Mi_2 pour l'alimentation électrique des deux moteurs électriques de l'ensemble ;

Les ensembles d'entrainement sont avantageusement tous identiques.
Les moteurs d'un même ensemble d'entraînement sont avantageusement tous identiques.
Les convertisseurs d'un même ensemble d'entraînement sont avantageusement tous identiques.
Les modules de stockage d'énergie électrique d'un même ensemble d'entraînement sont avantageusement tous identiques.

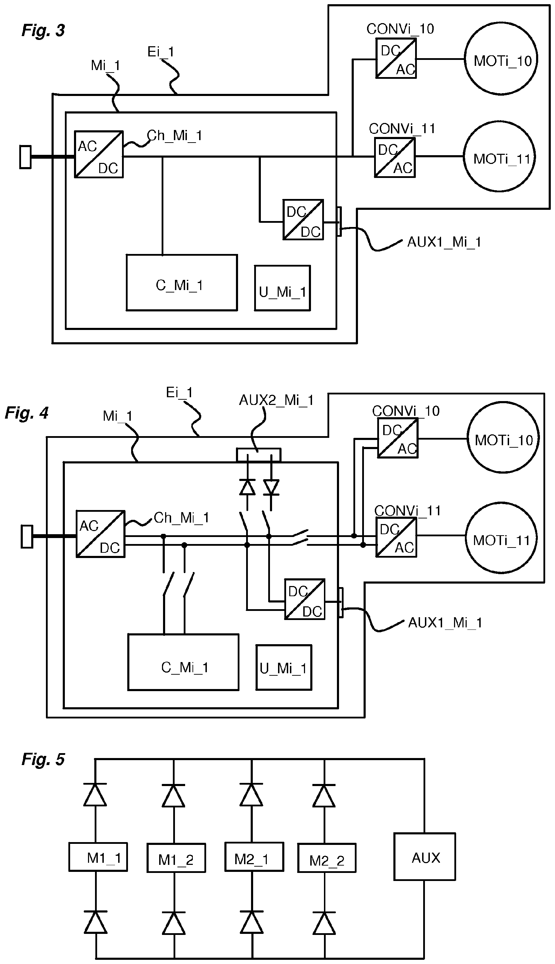

Les figures 3 et 4 représentent de manière détaillée un ensemble d'entraînement Ei_1 d'un véhicule Vi selon deux variantes de réalisation distinctes. Ces particularités s'appliquent avantageusement à tout ensemble d'entraînement du système.
De manière non limitative, dans l'ensemble d'entraînement Ei_1, chaque convertisseur CONVi_10, CONVi_11 de tension est avantageusement de type bidirectionnel, c'est-à-dire réversible en courant, permettant ainsi de fonctionner :

- Selon un mode moteur, dans lequel il contrôle un transfert d'énergie électrique du module de stockage d'énergie électrique vers son moteur pour l'alimenter, ou
- Selon un mode générateur, dans lequel il contrôle un transfert d'énergie électrique de son moteur électrique vers le module de stockage d'énergie électrique. Ce mode générateur est mis en œuvre lors d'un freinage du moteur électrique.

De manière connue, un tel convertisseur comportera par exemple :

- Un étage de sortie (convertisseur DC/AC) comprenant plusieurs bras de commutation commandés par une unité de commande ;
- Plusieurs phases de sortie reliées au moteur électrique et sur lesquelles sont appliquées les tensions de sortie de commande du moteur électrique ;

Dans l'ensemble d'entraînement Ei_1, chaque convertisseur CONVi_10, CONVi_11 sera avantageusement positionné au plus près du moteur qu'il commande, pour limiter au maximum les longueurs de câble et réduire les perturbations.
De manière connue, l'unité de commande du convertisseur met en œuvre au moins une boucle de contrôle du convertisseur pour commander les transferts d'énergie du module de stockage d'énergie électrique vers le moteur électrique pour le faire tourner à une vitesse de consigne ou du moteur électrique vers le module de stockage d'énergie électrique pour entraîner la charge du module de stockage d'énergie électrique.
De manière connue, lors du freinage du moteur électrique, si l'ensemble de roulement entraîne le moteur électrique, l'énergie électrique générée par cet entraînement peut être récupérée et transférée dans le module de stockage d'énergie électrique.
Dans un même ensemble d'entraînement, en mode moteur, les deux convertisseurs sont avantageusement commandés avec la même consigne de manière à ce que les deux moteurs tournent à la même vitesse.
On considérera qu'un module Mi_1 de stockage d'énergie électrique comporte plusieurs cellules C_Mi_1 élémentaires de stockage d'énergie électrique. Les cellules C_Mi_1 élémentaires peuvent être regroupées en plusieurs groupes de cellules connectées en série, les cellules d'un même groupe étant connectées entre elles en série et/ou parallèle. Dans la suite de la description, on parlera simplement de cellules pour exprimer à la fois une cellule ou un groupe de cellules. Chaque module de stockage d'énergie se présente par exemple sous la forme d'un boîtier indépendant enfermant les cellules de stockage d'énergie électrique. Chaque module Mi_1 est préférentiellement transportable et amovible du système pour être aisément remplacé.
De manière non limitative, dans chaque module, les cellules de stockage seront par exemple de type LiFePO4. Chaque cellule de ce type aura par exemple une tension pouvant aller de 2.5V à 3.5V, avec une tension nominale de 3.2V. Elles peuvent avoir une capacité allant de 1Ah à 200Ah selon les fabricants. Un module de stockage comporte par exemple plusieurs paquets de cellules mis en série permettant d'obtenir une tension nominale de fonctionnement élevée.

En référence aux figures 3 et 4, l'ensemble d'entraînement Ei_1 comporte avantageusement son propre chargeur Ch_Mi_1 agencé pour convertir la tension alternative fournie par une source d'alimentation électrique en une tension continue. Un tel chargeur Ch_Mi_1 est avantageusement intégré au module Mi_1 de stockage d'énergie électrique et comporte un convertisseur de type AC/DC. Celui-ci est utilisé pour assurer la recharge en énergie électrique des cellules de chaque module de stockage d'énergie électrique.

Le module Mi_1 comporte un bus continu d'alimentation sur lequel est connecté à la fois chaque convertisseur CONVi_10, CONVi_11 de l'ensemble d'entraînement et les cellules C_Mi_1 de stockage d'énergie électrique du module. Un condensateur de bus est par exemple employé pour stabiliser la tension du bus continu du module.

Le module comportera avantageusement plusieurs dispositifs de de décharge de type actif ou passif, permettant une décharge des cellules du module.

L'ensemble d'entraînement Ei_1 comporte des moyens de gestion de l'énergie électrique stockée dans les cellules de son module.

Ces moyens de gestion de l'énergie électrique comportent par exemple des capteurs de tension associés à chaque cellule du module et destinés à mesurer la tension aux bornes de chaque cellule du module. Ils comportent également des moyens d'acquisition des données de tension mesurée, des moyens de détermination de l'état de charge (SOC pour "State Of Charge") de chaque cellule du module, des moyens de détermination de l'état de santé du module (SOH pour "State Of Health"). Ils comportent avantageusement des moyens de détermination d'une demande d'équilibrage en tension des cellules du module. Les moyens d'acquisition, les moyens de détermination de l'état de charge et les moyens de détermination des demandes d'équilibrage en tension sont par exemple regroupés dans une même unité U_Mi_1 de gestion de l'énergie électrique (par exemple de type BMS pour "Battery Management System"), se présentant par exemple sous la forme d'un microcontrôleur distinct associé à la gestion de chaque module de stockage d'énergie électrique. Cette unité de gestion est par exemple logée dans le même boîtier que les cellules du module.

De manière non limitative, en référence à la figure 4, le module Mi_1 de stockage d'énergie électrique peut comporter une sortie AUX2_Mi_1 spécifique, à deux bornes, destinée à l'alimentation d'auxiliaires de puissance, par exemple des outils spécifiques (par exemple une toupie béton). Cette sortie auxiliaire spécifique est avantageusement protégée par deux diodes permettant d'empêcher tout transfert de courant d'un module de stockage à un autre lorsqu'au moins deux modules sont connectés en parallèle et deux contacteurs permettant de commander la fourniture d'énergie électrique du module vers les auxiliaires de puissance.

La figure 5 illustre l'architecture de connexion électrique entre un consommateur auxiliaire AUX et plusieurs modules de stockage (par exemple M1_1, M1_2, M2_1, M2_2) connectés en parallèle. Par cette figure, on comprend l'intérêt de la présence des diodes évoquées ci-dessus. L'auxiliaire AUX est connecté en parallèle sur la sortie spécifique de chaque module de stockage d'énergie électrique. De manière naturelle, c'est le module dont la tension est la plus élevée (c'est-à-dire le moins déchargé) qui fournit la puissance à l'auxiliaire connecté.

Les diodes sont positionnées de manière à éviter tout courant de retour vers les modules, c'est-à-dire tout courant de régénération en provenance de l'auxiliaire, et tout échange de courant d'un module à l'autre.

Dans le module Mi_1, plusieurs contacteurs sont positionnés de manière adaptée pour sélectionner la sortie du module, entre la sortie principale reliée aux moteurs de l'ensemble d'entraînement et la sortie auxiliaire évoquée ci-dessus. Ces contacteurs sont par exemple commandés par l'unité de gestion d'énergie électrique du module.

Sur les figures 3 et 4, on peut voir que chaque module intègre avantageusement une autre sortie auxiliaire AUX1_Mi_1 en basse tension (par exemple 24 V) par l'intermédiaire d'un convertisseur DC/DC connecté sur le bus continu d'alimentation du module.

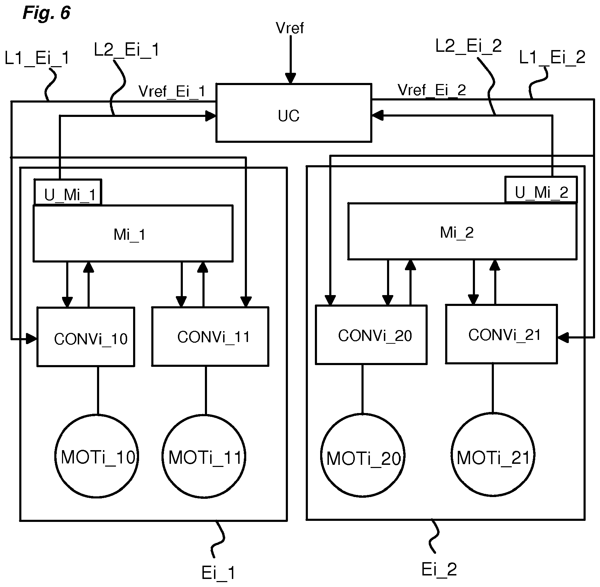

En référence à la figure 6, le système 1 comporte avantageusement une unité centrale UC de commande destinée à commander les 2n ensembles d'entraînement électrique du système de transport 1. Sur la figure 6, sont représentées les relations fonctionnelles entre l'unité centrale et deux ensembles d'entraînement (par exemple Ei_1, Ei_2) du système de transport. L'unité centrale UC se présente par exemple sous la forme d'un microcontrôleur comportant plusieurs entrées et plusieurs sorties.

Chaque ensemble d'entraînement électrique Ei_1 (Ei_2) est relié à des entrées ou sorties de l'unité centrale par différentes liaisons de communication :

-    Une première liaison de communication L1_Ei_1 (L1_Ei_2) entre l'unité centrale UC et les unités de commande des convertisseurs de l'ensemble d'entraînement électrique. Par cette première liaison, l'unité centrale UC émet une commande en vitesse (Vref_Ei_1, Vref_Ei_2) à destination de chaque unité de commande pour contrôler le convertisseur et donc le moteur électrique de l'ensemble d'entraînement ;
-    Une deuxième liaison de communication L2_Ei_1, (L2_Ei_2) entre l'unité centrale UC et l'unité de gestion de l'énergie électrique U_Mi_1, (U_Mi_2) du module de stockage d'énergie électrique de l'ensemble d'entraînement. A travers cette deuxième liaison de communication, l'unité centrale UC peut recevoir de la part de l'unité de gestion d'énergie électrique notamment l'état des cellules du module de stockage d'énergie électrique de l'ensemble d'entraînement. Le traitement d'une telle demande d'équilibrage par l'unité centrale sera explicité ci-dessous ;

Selon une particularité de l'invention, les modules Mi_X de stockage d'énergie électrique employés pour alimenter en énergie électrique les moteurs du système de transport ne présentent aucune liaison électrique de puissance entre eux, ni moyens de transfert de puissance (type convertisseur, contacteurs...) permettant un transfert de puissance direct d'un module vers un autre module par une liaison électrique de puissance. Ils sont donc dédiés chacun à l'entraînement d'un ou des deux moteurs électriques de leur ensemble d'entraînement électrique et ne partagent pas de bus DC commun.

La disponibilité maximale d'un système de transport tel que décrit ci-dessus est essentielle. Il est donc primordial d'optimiser la gestion et la charge des différents modules Mi_X de stockage d'énergie électrique du système de transport.

Dans ce cadre, il est possible de déterminer un état de charge cible SOCcible_T à atteindre lors du chargement des modules Mi_X de stockage d'énergie électrique d'un tel système de transport en tenant compte de plusieurs facteurs. Ces différents facteurs sont les suivants :

- L'emplacement du point de recharge par rapport au parcours à effectuer ;
- Les caractéristiques du système de transport et de sa charge (la masse de l'ensemble et le rendement du système) ;
- La cartographie du parcours à réaliser en autonomie électrique, incluant distance et pentes positives et négatives, la distance pouvant évoluer lorsque le système de transport est employé pour la construction d'une infrastructure telle qu'un tunnel ;
- La vitesse de consigne du système de transport ;

Ces différents paramètres permettent en effet d'estimer assez finement l'énergie électrique nécessaire au fonctionnement du système sur le parcours et donc l'état de charge cible SOCcible_T à atteindre pour permettre à la fois de :

- Réaliser le parcours en totale autonomie ;
- Minimiser la consommation d'énergie électrique lors de la charge des modules de stockage ;
- Augmenter le temps de disponibilité du système de transport, celui-ci ne passant que la durée juste nécessaire en charge ;

Cette solution technique tient compte du fait que chaque module Mi_X de stockage d'énergie électrique peut récupérer de l'énergie électrique lors du freinage du système de transport. En effet, lors du freinage du système, chaque convertisseur réversible des 2n ensembles d'entraînement permet de commander un transfert du courant généré lors du freinage vers le module de stockage d'énergie électrique qui lui est associé.

Pour déterminer un état de charge cible SOCcible_T, il s'agit donc de :

- Diviser le parcours à effectuer en autonomie électrique en plusieurs portions, chaque portion étant soit de pente positive (en montée), soit de pente négative (en descente), soit de pente nulle ;

- Déterminer le gain ou la perte en énergie électrique générée pour chaque portion du parcours ;

L'état de charge SOCcible_T sera à choisir dans une plage de valeurs comprise entre une valeur minimale (SOCmin) et une valeur maximale (SOCmax) déterminées qui permettent de répondre aux différentes contraintes fixées ci-dessus. Cette valeur minimale SOCmin et cette valeur maximale SOCmax seront avantageusement inférieures à 100%.

De manière plus précise, un algorithme de détermination de l'état de charge cible SOCcible_T est exécuté pour l'ensemble des modules Mi_X de stockage d'énergie électrique disponibles. Cet algorithme sera mémorisé dans des premiers moyens de traitement UC1 et exécuté par ces premiers moyens de traitement UC1. Ces premiers moyens de traitement seront par exemple compris dans l'unité centrale UC évoquée ci-dessus.

Ces premiers moyens de traitement UC1 reçoivent ainsi en entrée et mémorisent les différents paramètres suivants :

- Le parcours à réaliser et le nombre de portions Pj formant le parcours, chaque portion Pj de parcours ayant une distance et une pente (positive, négative ou nulle) ;

- Les caractéristiques du système de transport ;

A partir de leur algorithme, les premiers moyens de traitement UC1 déterminent :

- L'état de charge minimal SOCmin auquel l'ensemble des modules Mi_X de stockage d'énergie électrique doit être chargé pour effectuer ledit parcours en totale autonomie ; Une marge peut être ajoutée pour tenir compte des conditions de fonctionnement ;

- L'état de charge maximal SOCmax auquel les modules de stockage Mi_X doivent être chargés pour permettre d'utiliser au maximum le freinage régénératif sur le parcours. Cet état de charge maximal SOCmax est donc calculé en fonction d'un état de charge de 100% atteint sur le parcours.

- L'état de charge cible SOCcible_T auquel l'ensemble des modules de stockage d'énergie électrique du système doit être chargé en tenant compte de SOCmax et de SOCmin.

Bien entendu, on peut noter que le parcours peut évoluer au cours du temps (par exemple lors de la construction d'une infrastructure telle qu'un tunnel). Dans ce cas, la correction du parcours peut être réalisée manuellement ou de manière automatique en tenant compte de la distance effectuée lors du dernier parcours et de la vitesse d'avancement des travaux (par exemple vitesse de creuse du tunnel).

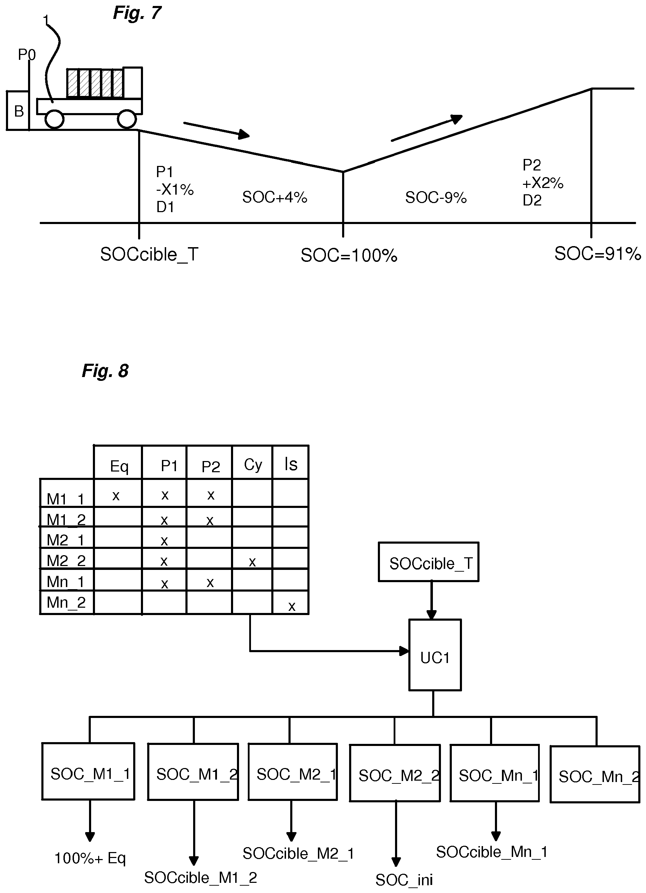

La figure 7 illustre le principe de fonctionnement de cet algorithme. Sur cette figure 7, on peut voir que le système de transport 1 est amené à effectuer un parcours qui comporte, depuis son point de recharge (P0) : une première portion P1 de pente négative et une deuxième portion P2 de pente positive. Le parcours est par exemple réalisé en aller-retour. Bien entendu, l'état de charge cible SOCcible_T pourra être calculé en tenant compte du fait que le système de transport doit effectuer plusieurs fois le même parcours (c'est-à-dire plusieurs aller-retours) sans être rechargé.

A titre d'illustration, les modules de stockage d'énergie électrique du système sont chargés à son point de recharge à un état de charge cible SOCcible_T de 96%. La première portion du parcours étant d'une distance D1 et d'une pente X1 négative de 1%, le gain déterminé en état de charge sera par exemple de 4% sur cette première portion P1 du parcours. Au bout de cette première portion P1, les modules Mi_X de stockage d'énergie électrique du système seront donc chargés à un état de charge de 100% (96%+4%). La deuxième portion P2 étant d'une distance D2 et d'une pente X2 positive de 2%, la perte en état de charge déterminée pour cette deuxième portion P2 du parcours sera de 9%. Au bout de cette deuxième portion, l'état de charge global des modules de stockage d'énergie électrique sera donc de 91% (100%-9%).

Pour chaque portion du parcours à réaliser, le gain ou la perte en état de charge sera déterminé à partir des expressions ci-dessous.

L'état de charge de l'ensemble des modules s'exprime par la relation suivante :

$$SOC = Ah / Ahmax$$

Dans laquelle :

- SOC définit l'état de charge de l'ensemble des modules de stockage d'énergie électrique ;
- Ah qui correspond au nombre d'Ampère-Heure disponible dans l'ensemble des modules ;

- Ahmax qui correspond au nombre d'Ampère-Heure maximal que peut recevoir l'ensemble des modules, cette valeur étant connue ;

On a également l'expression suivante :

$$Ah = Imod * t$$

Avec :

- Imod qui correspond au courant délivré par l'ensemble des modules au cours du temps t ;
- t qui correspond au temps de parcours du système, ce temps étant connu à partir de la vitesse moyenne et de la distance de la portion du parcours à réaliser ;

$$Imod = P / Umod$$

Avec

- Umod qui correspond à la tension fournie par le module, cette tension étant connue et correspondant à la tension moyenne fournie par le module ;
- P qui correspond à la puissance à fournir pour atteindre une vitesse v définie, selon l'expression :

$$P = F * v$$

Avec

- v la vitesse du système de transport, qui est connue sur la portion du parcours ;
- F la force qui dépend de la masse, la gravité, l'angle de la pente de la portion du parcours, les différents frottements et différents rendements, selon si la pente est positive ou négative...

De ces expressions, on comprend qu'il est aisé de déterminer le niveau de charge nécessaire pour parcourir chaque portion du parcours, à partir du moment où les caractéristiques du système de transport sont connues ainsi que la topologie du parcours à réaliser.

Dans l'exemple de la figure 7, les modules Mi_X de stockage d'énergie électrique du système ont été chargés à un état de charge global cible SOCcible_T égal à SOCmax (c'est-à-dire 96%), leur permettant d'atteindre un état de charge égal à 100% sur le parcours (au bout de la première portion).

Une fois que l'état de charge cible global SOCcible_T a été déterminé pour réaliser le parcours, les premiers moyens de traitement sont amenés à déterminer l'état de charge, désigné SOC_Mi_X, auquel chaque module Mi_X du système de transport doit être chargé.

Les premiers moyens de traitement UC1 sont aptes à déterminer cet état de charge SOC_Mi_X en tenant compte de diverses contraintes :

- L'état de charge cible SOCcible_T déterminé ;
- De la nécessité d'effectuer diverses fonctions de gestion sur chaque module de stockage d'énergie électrique, la mise en œuvre d'une telle fonction pouvant nécessiter un état de charge particulier ;
- Optionnellement et de manière avantageuse, de l'état de disponibilité de chaque module de stockage sur le parcours à réaliser ;

Selon le mode de réalisation une fonction de gestion effectuée consiste en une séquence d'équilibrage en tension des cellules d'un module de stockage d'énergie électrique, nécessitant alors une charge jusqu'à un état de charge de 100%. Une autre fonction de gestion sera par exemple la mise en œuvre d'un cycle complet de décharge/charge d'un module afin d'optimiser ses performances. Dans cette situation, le module de stockage ne devra par exemple pas être chargé du tout pour qu'il puisse se décharger totalement sur le parcours ou être chargé à 100% s'il en est à la moitié de son cycle.

L'état de disponibilité de chaque module permet de déterminer si le module est destiné à participer ou non à l'entraînement du système de transport sur chaque portion du parcours à réaliser. Pour différentes raisons, un module pourra en effet être amené à ne pas participer à l'entraînement du système de transport sur tout ou partie du parcours.

Les premiers moyens de traitement UC1 sont donc agencés pour effectuer une planification d'utilisation des modules au cours du temps et pour déterminer l'état de charge SOC_Mi_X auquel chaque module doit être chargé pour tenir compte des différentes contraintes définies ci-dessus. Les premiers moyens de traitement comportent par exemple des moyens de lecture d'une table listant les différents états de chaque module afin de recueillir les données liées à chaque module et de mettre en œuvre les opérations adaptées, notamment la détermination de l'état de charge à atteindre lors de la recharge du module.

Par ailleurs, selon un autre aspect de l'invention, un ou plusieurs modules de stockage d'énergie électrique du système de transport 1 pourront être isolés du reste des modules. Ces modules isolés ne seront pas chargés et ne participeront pas à l'entraînement du système de transport 1. Il s'agira par exemple de modules présentant un défaut ou susceptibles de présenter un défaut.

Selon un autre aspect de l'invention, certains modules pourront toujours être chargés à un même état de charge, par exemple à 100% tandis que l'état de charge cible SOCcible_T devra être obtenu grâce aux autres modules.

Dans la suite de la description, on définira ainsi plusieurs états de charge distincts, auxquels les différents modules pourront être chargés selon les conditions :

- SOC=100%, notamment lorsqu'un équilibrage en tension des cellules du module doit être effectué, cet état de charge participant à l'état de charge cible SOCcible_T global si le module est disponible sur au moins une partie du parcours ;

- SOC=SOCcible_Mi_X correspondant à un état de charge optimal auquel le module doit être chargé pour tenir compte de l'état de charge global SOCcible_T, cet état de charge étant préférentiellement inférieur à 100% ; Il pourra être différent d'un module à l'autre ;

- SOC=SOC_ini correspondant à un maintien dans son état de charge initial au moment de sa connexion à la borne de recharge. Ce sera le cas notamment lorsque le module va être amené à être déchargé complètement.

L'état de charge optimal SOCcible_Mi_X attribué à chaque module pourra être identique pour tous les modules à charger à cet état de charge. Il est par exemple calculé par un module logiciel des premiers moyens de traitement UC1 à partir :

- De l'état de charge cible global SOCcible_T déterminé ;

- Du nombre de modules à charger à un état de charge de 100% et de l'état de charge égal à 100% de ces modules ;

- Du nombre de modules à charger à l'état de charge SOC_ini et de l'état de charge égal à SOC_ini de ces modules ;

- Optionnellement, du nombre de modules isolés si c'est le cas de certains modules du système ;

- Du nombre total de modules du système.

La figure 8 illustre le principe de gestion de la charge des modules de stockage d'énergie électrique d'un système de transport 1.

Sur cette figure 8, les premiers moyens de traitement UC1 déterminent l'état de charge à atteindre pour chaque module Mi_X de stockage d'énergie électrique du système de transport. Les premiers moyens de traitement UC1 reçoivent en entrée :

- L'état de charge cible global SOCcible_T déterminé pour réaliser le parcours, comme défini ci-dessus ;

- L'état d'exécution des fonctions de gestion pour chaque module de stockage d'énergie électrique ;

- Optionnellement, l'état de disponibilité de chaque module de stockage d'énergie électrique du système de transport, celui-ci pouvant être particulièrement avantageux ;

- Optionnellement, l'état isolé ou non isolé de chaque module ;

Sur la figure 8, pour chaque module Mi_X, on a représenté une table qui répertorie :

- L'état de disponibilité du module sur la portion P1 du parcours et sur la portion P2 du parcours ;

- L'état d'exécution d'une fonction de gestion du type équilibrage en tension du module (colonne Eq) ;

- L'état d'exécution d'une fonction de gestion de type cycle complet de décharge/charge (colonne Cy) ;

- L'état isolé ou non isolé (colonne Is) du module.

Sur cette figure 8, on remarque ainsi que le module M1_1 nécessite un équilibrage en tension de ses cellules. Il sera donc chargé à 100% pour effectuer ensuite cette séquence d'équilibrage (Eq). Les modules M1_2, M2_1 et Mn_1 seront chargés au SOCcible_Mi_X déterminé pour chacun d'eux (éventuellement identique pour chacun d'eux). Le module M2_2 sera maintenu à son état de charge initial, afin de pouvoir être déchargé complètement lors du prochain trajet. Le module Mn_2 est isolé, il ne sera pas chargé et ne participera pas à l'entraînement du système.

De manière plus précise, Il est en effet connu que chaque module Mi_X de stockage d'énergie électrique doit bénéficier de temps en temps d'un équilibrage en tension de ses cellules afin de préserver toutes ses capacités.

La charge d'un module à un état de charge permettant d'obtenir l'état de charge cible SOCcible_T décrit ci-dessus ne tient en effet pas compte de l'équilibrage en tension de ses cellules. Une séquence d'équilibrage en tension des cellules du module doit être réalisée sur un module chargé à un état de charge SOC_Mi_X de 100%. Or si le module est toujours chargé à 100%, il ne peut bénéficier de l'algorithme décrit ci-dessus lui permettant d'être chargé à l'état de charge cible SOCcible_Mi_X et bénéficier des possibilités de freinage régénératif du parcours.

Ainsi, il s'agit de n'effectuer la séquence d'équilibrage en tension que sur les modules de stockage d'énergie électrique qui en ont besoin. Ceux qui doivent bénéficier d'un équilibrage en tension devront être chargés à un état de charge SOC de 100% alors que les autres pourront être chargés à état de charge inférieur, notamment à l'état de charge cible SOCcible_Mi_X afin de pouvoir bénéficier du freinage régénératif.

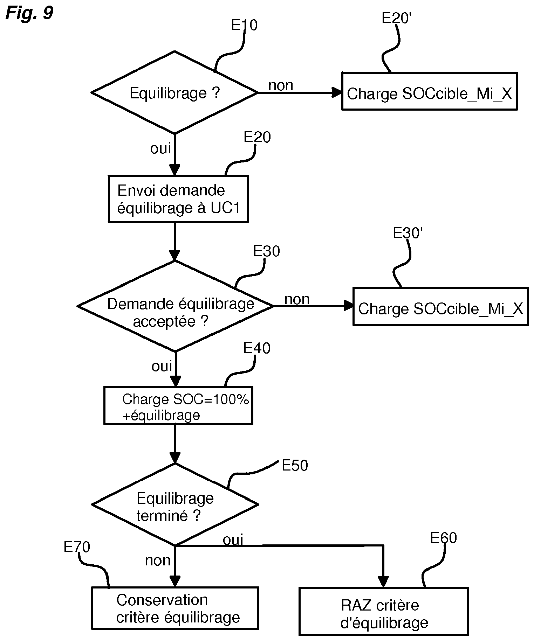

Grâce à un algorithme, il s'agit donc de déterminer, pour chaque module, si l'équilibrage en tension est nécessaire. Cet algorithme est mémorisé dans des deuxièmes moyens de traitement et exécuté par ces deuxièmes moyens de traitement. De manière avantageuse, pour chaque module, ces deuxièmes moyens de traitement sont au moins en partie formés par l'unité de gestion d'énergie électrique associé au module de stockage d'énergie électrique. La figure 9 illustre l'algorithme mis en œuvre pour chaque module de stockage d'énergie électrique.

En référence à la figure 9, pour un module Mi_X, l'algorithme exécuté comporte les étapes suivantes :

Etape 1 - E10 : Il s'agit de l'exécution d'un bloc logiciel de détermination ou de test exécuté par les deuxièmes moyens de traitement pour déterminer si l'équilibrage en tension est nécessaire. Pour cela, un critère de décision mémorisé est avantageusement employé. Ce critère de décision sera notamment basé sur des mesures de tension aux bornes des cellules du module de stockage d'énergie électrique. Cette étape de mesure sera réalisée avec des capteurs de tension logés dans le module de stockage d'énergie électrique.

Etape 2 - E20 : Si l'équilibrage est nécessaire, un bloc logiciel de commande est exécuté par les deuxièmes moyens de traitement pour avertir les premiers moyens de traitement UC1 qu'un équilibrage en tension des cellules du module est recommandé. Etape 3 - E30 : il s'agit d'un bloc de test pour déterminer si la demande d'équilibrage a été acceptée.

Etape 4 - E40 : Si la demande d'équilibrage est validée par les premiers moyens de traitement UC1, les deuxièmes moyens de traitement exécutent un bloc logiciel pour commander la charge jusqu'à un état de charge de 100% et la mise en œuvre d'une séquence d'équilibrage en tension des cellules.

Etape 5 - E50 : Un bloc logiciel de test est exécuté par les deuxièmes moyens de traitement pour déterminer si la séquence d'équilibrage en tension des cellules du module est terminée. Ce test est nécessaire pour s'assurer que la séquence d'équilibrage est bien menée jusqu'au bout. Elle peut en effet être interrompue si le système de transport 1 est utilisé avant la fin de la charge.

Etape 6 - E60 : Si la séquence d'équilibrage est terminée, un bloc logiciel modifie le critère de décision, par exemple en réinitialisant ledit critère.

Etape 7 - E70 : Si la séquence d'équilibrage n'est pas terminée, le critère de décision est conservé jusqu'à ce que la séquence d'équilibrage soit menée à son terme. L'étape 1 décrite ci-dessus sera alors à nouveau mise en œuvre pour le module par les deuxièmes moyens de traitement.

Etape 2' - E20' : Si l'équilibrage en tension n'est pas nécessaire, la charge pourra être effectuée jusqu'à un état de charge inférieur à 100%, par exemple égal à l'état de charge cible SOCcible_Mi_X fixé pour le module. Un bloc logiciel est alors exécuté pour commander la charge du module jusqu'à cet état de charge.

Etape 3' - E30' : Si la demande d'équilibrage n'est pas acceptée par les premiers moyens de traitement, la charge sera effectuée avantageusement jusqu'à SOCcible_Mi_X.

La charge de chaque module sera assurée par des moyens de charge, par exemple une borne de recharge B (par exemple situé au point P0 sur la figure 7) jusqu'à l'état de charge déterminée pour le module. Toute solution de charge connue pourrait être envisagée.
Un système de gestion de la charge selon l'invention inclut avantageusement les premiers moyens de traitement et les deuxièmes moyens de traitement décrits ci-dessus. Un tel système comportera un ou plusieurs microprocesseurs associés à des moyens de mémorisation. Le système de gestion comportera avantageusement lesdits moyens de charge commandés par les premiers moyens de traitement et les deuxièmes moyens de traitement pour charger les modules du système à l'état de charge déterminé pour chacun d'eux. De même, le procédé de gestion de la charge des modules décrit ci-dessus comportera alors une étape de commande de la charge jusqu'à l'état de charge déterminé pour chaque module.
Le critère de décision de la nécessité d'un équilibrage en tension des cellules d'un module de stockage d'énergie électrique pourra être de différents types. De manière non limitative, ce critère de décision pourra prendre au moins une valeur alphanumérique tenant compte des différents paramètres ci-dessous, pris seuls ou en combinaison :

- Le nombre d'ampère-heure chargés sur le module ;

- D'une liste incluant des données d'horodatage indiquant les dates des équilibrages en tension effectués sur chaque module ;

- De l'état de santé (SOH pour "State Of Health") de chaque module ;

Certaines de ces données seront rendus disponibles par l'unité de gestion électrique de chaque module et basées sur des mesures de tension aux bornes des cellules du module.
De la description ci-dessus, on comprend qu'il est intéressant de proposer une solution de gestion de la charge d'un système de transport qui permet à la fois d'optimiser l'état de charge de chaque module de stockage d'énergie électrique du système et d'assurer de manière régulière des fonctions de gestion sur les modules du système de transport. Il sera ainsi possible de maintenir un fonctionnement optimal du système tout en bénéficiant des possibilités offertes par la régénération de courant lors des freinages.

**Revendications**

1. Procédé de gestion de la charge électrique de plusieurs modules (Mi_X) de stockage d'énergie électrique employés dans un système de transport (1) à énergie électrique destiné à effectuer un parcours, ledit système de transport comportant n véhicules, n étant supérieur ou égal à 1, chaque véhicule comportant :

- Au moins deux ensembles de roulement (Ri_X) ;
- Au moins deux ensembles d'entraînement électrique (Ei_X), dits premier ensemble d'entraînement électrique et deuxième ensemble d'entraînement électrique, associés chacun à un ensemble de roulement distinct, chaque ensemble d'entraînement électrique comprenant :

    ○ Au moins un moteur électrique (MOTi_Y) pour entraîner ledit ensemble de roulement au sol en rotation ;
    ○ Au moins un module (Mi_X) de stockage d'énergie électrique destiné à alimenter ledit moteur électrique en énergie électrique et comportant plusieurs cellules de stockage d'énergie électrique ;
    ○ Au moins un convertisseur de tension (CONVi_Y) bidirectionnel agencé pour contrôler le transfert d'énergie électrique entre ledit module de stockage d'énergie électrique et ledit moteur électrique ;

- Le module de stockage d'énergie électrique du premier ensemble d'entraînement électrique ne présentant aucune liaison électrique de puissance avec le module de stockage d'énergie électrique du deuxième ensemble d'entraînement électrique ; Ledit procédé comportant:
- Une étape de détermination d'un état de charge cible (SOCcible_T) global à atteindre pour l'ensemble des modules de stockage pour que le système de transport effectue ledit parcours en totale autonomie électrique en tenant compte d'une sollicitation électrique en charge et en décharge des modules de stockage d'énergie électrique, induite par le fonctionnement du système de transport sur ledit parcours ;
- Une étape de détermination, pour chaque module de stockage du système de transport, d'un état de charge (SOC_Mi_X) à atteindre, cet état de charge étant déterminé pour chaque module en fonction :

    ◦ De l'état de charge cible (SOCcible_T) déterminé ;
    ◦ De la mise en œuvre d'une ou plusieurs fonctions de gestion sur le module de stockage d'énergie électrique du système, l'une desdites une ou plusieurs fonctions de gestion consistant en une séquence d'équilibrage en tension des cellules d'un module de stockage d'énergie électrique qui nécessite la charge du module jusqu'à un état de charge de 100%.

**2.** Procédé selon la revendication 1, **caractérisé en ce que** l'état de charge (SOC_Mi_X) est également déterminé en tenant compte d'un état de disponibilité affecté au module de stockage d'énergie électrique sur le parcours.

**3.** Procédé selon la revendication 1 ou 2, **caractérisé en ce que** l'état de charge à atteindre pour au moins un module de stockage correspond à un état de charge optimal (SOCcible_Mi_X) qui est calculé à partir :

    - De l'état de charge cible global (SOCcible_T) déterminé ;
    - D'un nombre de modules à charger à un état de charge particulier selon ladite fonction de gestion mise en œuvre et de l'état de charge attribué à ces modules ;
    - Du nombre total de modules du système.

**4.** Procédé selon la revendication 3, **caractérisé en ce que** ledit état de charge optimal est également déterminé en tenant compte d'un nombre de modules isolés, c'est-à-dire ne participant ni à la charge, ni à l'entraînement dudit système de transport (1).

**5.** Procédé selon la revendication 1, **caractérisé en ce qu'**il comporte :

    - Une étape de test (E10) pour déterminer si une séquence d'équilibrage en tension des cellules dudit module électrique est nécessaire ;
    - Une étape de commande (E20') d'une charge du module de stockage d'énergie électrique audit état de charge optimal déterminé, si ladite séquence d'équilibrage en tension ne doit pas être mise en œuvre ;
    - Une étape de commande (E40) d'une charge du module de stockage d'énergie électrique jusqu'à un deuxième état de charge égal à 100% et d'une séquence d'équilibrage en tension des cellules lorsque ce deuxième état de charge est atteint si ladite séquence d'équilibrage est nécessaire et acceptée.

**6.** Procédé selon la revendication 5, **caractérisé en ce que** l'étape de test (E10) est mise en œuvre en se basant sur au moins un critère de décision mémorisé présentant une valeur déterminée.

**7.** Procédé selon la revendication 6, **caractérisé en ce que** l'étape de test (E10) comporte une étape de mesure de la tension aux bornes des cellules de stockage d'énergie électrique du module de stockage d'énergie électrique.

**8.** Procédé selon l'une des revendications 5 à 7, **caractérisé en ce qu'**il comporte une étape de vérification (E50) d'un état d'avancement de la séquence d'équilibrage en tension des cellules du module de stockage d'énergie électrique.

**9.** Procédé selon la revendication 8, **caractérisé en ce qu'**il comporte une étape de maintien (E70) du critère de décision à sa valeur déterminée tant que la séquence d'équilibrage n'est pas terminée.

**10.** Procédé selon la revendication 8 ou 9, **caractérisé en ce qu'**il comporte une étape de modification (E60) de ladite valeur du critère de décision, mise en œuvre après la fin de la séquence d'équilibrage en tension des cellules du module de stockage d'énergie électrique.

**11.** Système de transport (1) à énergie électrique comportant un système de gestion de la charge électrique de plusieurs modules de stockage d'énergie électrique employés dans le système de transport (1) qui est destiné à effectuer un parcours, ledit système de transport comportant n véhicules, n étant supérieur ou égal à 1, chaque véhicule comportant :

    - Au moins deux ensembles de roulement (Ri_X) ;
    - Au moins deux ensembles d'entraînement électrique (Ei_X), dits premier ensemble d'entraînement électrique et deuxième ensemble d'entraînement électrique, associés chacun à un ensemble de roulement distinct, chaque ensemble d'entraînement électrique comprenant :

        ◦ Au moins un moteur électrique (MOTi_Y) pour entraîner ledit ensemble de roulement au sol en rotation ;
        ◦ Au moins un module (Mi_X) de stockage d'énergie électrique destiné à alimenter ledit moteur électrique en énergie électrique et comportant plusieurs cellules de stockage d'énergie électrique ;
        ◦ Au moins un convertisseur de tension (CONVi_Y) bidirectionnel agencé pour contrôler le transfert d'énergie électrique entre ledit module de stockage d'énergie électrique et ledit moteur électrique ;

- Le module de stockage d'énergie électrique du premier ensemble d'entraînement électrique ne présentant aucune liaison électrique de puissance avec le module de stockage d'énergie électrique du deuxième ensemble d'entraînement électrique ;

Ledit système de gestion comprenant des moyens de traitement agencés pour déterminer un état de charge électrique à appliquer à chaque module de stockage d'énergie électrique, comportant

- Un bloc de détermination d'un état de charge cible (SOCcible_T) global à atteindre pour l'ensemble des modules de stockage pour que le système de transport effectue ledit parcours en totale autonomie électrique en tenant compte d'une sollicitation électrique en charge et en décharge des modules, induite par le fonctionnement du système de transport sur ledit parcours ;

- Un bloc de détermination, pour chaque module de stockage du système de transport, d'un état de charge (SOC_Mi_X) à atteindre, cet état de charge étant déterminé pour chaque module en fonction :

  ◦ De l'état de charge cible (SOCcible_T) déterminé ;
  ◦ De la mise en œuvre d'une ou plusieurs fonctions de gestion sur le module de stockage d'énergie électrique du système, l'une desdites une ou plusieurs fonctions de gestion consistant en une séquence d'équilibrage en tension des cellules d'un module de stockage d'énergie électrique qui nécessite la charge du module jusqu'à un état de charge de 100%.

12. Système selon la revendication 11, **caractérisé en ce que** l'état de charge (SOC_Mi_X) à atteindre pour chaque module est déterminé en tenant compte d'un état de disponibilité affecté au module de stockage d'énergie électrique sur le parcours.

13. Système selon la revendication 11 ou 12, **caractérisé en ce que** l'état de charge à atteindre pour au moins un module de stockage correspond à un état de charge optimal (SOCcible_Mi_X) qui est calculé à partir :

  - De l'état de charge cible global (SOCcible_T) déterminé ;
  - D'un nombre de modules à charger à un état de charge particulier selon ladite fonction de gestion mise en œuvre et de l'état de charge attribué à ces modules ;

- Du nombre total de modules du système.

14. Système selon la revendication 13, **caractérisé en ce que** ledit état de charge optimal (SOCcible_Mi_X) est également déterminé en tenant compte d'un nombre de modules isolés, c'est-à-dire ne participant ni à la charge, ni à l'entraînement dudit système de transport (1).

15. Système selon la revendication 14, **caractérisé en ce qu'**il comporte :

  - Un bloc de test agencé pour déterminer si une mise en œuvre d'une séquence d'équilibrage en tension des cellules dudit module électrique est nécessaire ;
  - Un bloc de commande d'une charge jusqu'audit état de charge optimal déterminé, si ladite séquence d'équilibrage en tension ne doit pas être mise en œuvre ;
  - Un bloc de commande d'une charge jusqu'à un deuxième état de charge égal à 100% et d'une séquence d'équilibrage en tension des cellules lorsque ce deuxième état de charge est atteint si la séquence d'équilibrage est nécessaire et acceptée.

16. Système selon la revendication 15, **caractérisé en ce que** le bloc de test est exécuté en se basant sur au moins un critère de décision mémorisé présentant une valeur déterminée.

17. Système selon la revendication 16, **caractérisé en ce qu'**il comporte des moyens de mesure de tension aux bornes des cellules de stockage d'énergie électrique du module de stockage d'énergie électrique et **en ce que** ledit critère de décision est basé sur des mesures de tension effectuées grâce auxdits moyens de mesure.

18. Système selon l'une des revendications 15 à 17, **caractérisé en ce qu'**il comporte un bloc de test agencé pour déterminer l'état d'avancement de la séquence d'équilibrage en tension des cellules du module de stockage d'énergie électrique.

19. Système selon la revendication 15, **caractérisé en ce qu'**il comporte un bloc de modification de ladite valeur du critère de décision, exécuté après la fin de la séquence d'équilibrage en tension des cellules du module de stockage d'énergie électrique.

**Patentansprüche**

1. Verfahren zur Verwaltung des elektrischen Ladevorgangs mehrerer Module (Mi_X) zur Speicherung elektrischer Energie, die in einem elektrobetriebenen Transportsystem (1) verwendet werden, das dazu bestimmt ist, eine Strecke zurückzulegen, wobei das Transportsystem n Fahrzeuge aufweist, wobei n größer als oder gleich 1 ist, jedes Fahrzeug aufweisend:

- Wenigstens zwei Rollanordnungen (Ri_X);
- Wenigstens zwei Elektroantriebsanordnungen (Ei_X), die erste Elektroantriebsanordnung und zweite Elektroantriebsanordnung, die jeweils einer gesonderten Rollanordnung zugeordnet sind, jede Elektroantriebsanordnung umfassend:

 o Wenigstens einen Elektromotor (MOTi_Y), um die Rollanordnung am Boden drehend anzutreiben;
 o Wenigstens ein Modul (Mi_X) zur Speicherung elektrischer Energie, das dazu bestimmt ist, den Elektromotor mit elektrischer Energie zu versorgen, und mehrere Zellen zur Speicherung elektrischer Energie aufweist;
 o Wenigstens einen bidirektionalen Spannungswandler (CONVi_Y), der angeordnet ist, die Übertragung elektrischer Energie zwischen dem Modul zur Speicherung elektrischer Energie und dem Elektromotor zu steuern;

- Wobei das Modul zur Speicherung elektrischer Energie der ersten Elektroantriebsanordnung keine elektrische Leistungsverbindung mit dem Modul zur Speicherung elektrischer Energie der zweiten Elektroantriebsanordnung aufweist;

Das Verfahren aufweisend:

- Einen Schritt des Bestimmens eines gesamten Soll-Ladezustands (SOCcible_T), der für die Gesamtheit der Speicherungsmodule zu erreichen ist, damit das Transportsystem die Strecke in völliger elektrischer Autonomie zurücklegt, unter Berücksichtigung einer elektrischen Beanspruchung beim Laden und Entladen der Module zur Speicherung elektrischer Energie, die durch den Betrieb des Transportsystems auf der Strecke hervorgerufen wird;
- Einen Schritt des Bestimmens eines zu erreichenden Ladezustands (SOC_Mi_X) für jedes Speicherungsmodul des Transportsystems, wobei dieser Ladezustand für jedes Modul in Abhängigkeit von Folgendem bestimmt wird:

 ◦ Vom bestimmten Soll-Ladezustand (SOCcible_T);
 ◦ Von der Umsetzung einer oder mehrerer Verwaltungsfunktionen am Modul zur Speicherung elektrischer Energie des Systems, wobei eine der einen oder mehreren Verwaltungsfunktionen aus einer Sequenz zum Spannungsausgleich der Zellen eines Moduls zur Speicherung elektrischer Energie besteht, die die Ladung des Moduls bis zu einem Ladezustand von 100 % erfordert.

2. Verfahren nach Anspruch 1, **dadurch gekennzeichnet, dass** der Ladezustand (SOC_Mi_X) ebenfalls unter Berücksichtigung eines Verfügbarkeitsstands bestimmt wird, der dem Modul zur Speicherung elektrischer Energie auf der Strecke zugewiesen wird.

3. Verfahren nach Anspruch 1 oder 2, **dadurch gekennzeichnet, dass** der Ladezustand, der für wenigstens ein Speicherungsmodul zu erreichen ist, einem optimalen Ladezustand (SOCcible_Mi_X) entspricht, der anhand von Folgendem berechnet wird:

- Vom bestimmten gesamten Soll-Ladezustand (SOCcible_T);
- Von einer Anzahl von Modulen, die gemäß der umgesetzten Verwaltungsfunktion auf einen bestimmten Ladezustand zu laden sind, und vom Ladezustand, der diesen Modulen zugeteilt wird;
- Von der Gesamtzahl von Modulen des Systems.

4. Verfahren nach Anspruch 3, **dadurch gekennzeichnet, dass** der optimale Ladezustand ebenfalls unter Berücksichtigung einer Anzahl von isolierten Modulen, das heißt, die weder am Ladevorgang noch am Antrieb des Transportsystems (1) beteiligt sind, bestimmt wird.

5. Verfahren nach Anspruch 1, **dadurch gekennzeichnet, dass** es Folgendes aufweist:

- Einen Schritt des Testens (E10) zum Bestimmen, ob eine Sequenz zum Spannungsausgleich der Zellen des elektrischen Moduls notwendig ist;
- Einen Schritt des Steuerns (E20') eines Ladevorgangs des Moduls zur Speicherung elektrischer Energie auf den bestimmten optimalen Ladezustand, wenn die Spannungsausgleichssequenz nicht durchgeführt werden soll;
- Einen Schritt des Steuerns (E40) eines Ladevorgangs des Moduls zur Speicherung elektrischer Energie bis zu einem zweiten Ladezustand gleich 100 % und einer Sequenz zum Spannungsausgleich der Zellen, wenn dieser zweite Ladezustand erreicht ist, wenn die Ausgleichssequenz notwendig und akzeptiert ist.

**6.** Verfahren nach Anspruch 5, **dadurch gekennzeichnet, dass** der Schritt des Testens (E10) basierend auf wenigstens einem gespeicherten Entscheidungskriterium durchgeführt wird, das einen bestimmten Wert aufweist.

**7.** Verfahren nach Anspruch 6, **dadurch gekennzeichnet, dass** der Schritt des Testens (E10) einen Schritt des Messens der Spannung an den Anschlüssen der Zellen zur Speicherung elektrischer Energie des Moduls zur Speicherung elektrischer Energie aufweist.

**8.** Verfahren nach einem der Ansprüche 5 bis 7, **dadurch gekennzeichnet, dass** es einen Schritt des Überprüfens (E50) eines Fortschritts der Sequenz zum Spannungsausgleich der Zellen des Moduls zur Speicherung elektrischer Energie aufweist.

**9.** Verfahren nach Anspruch 8, **dadurch gekennzeichnet, dass** es einen Schritt des Beibehaltens (E70) des Entscheidungskriteriums auf seinem bestimmten Wert, solange die Ausgleichssequenz nicht abgeschlossen ist, aufweist.

**10.** Verfahren nach Anspruch 8 oder 9, **dadurch gekennzeichnet, dass** es einen Schritt des Änderns (E60) des Werts des Entscheidungskriteriums aufweist, der nach dem Ende der Sequenz zum Spannungsausgleich der Zellen des Moduls zur Speicherung elektrischer Energie durchgeführt wird.

**11.** Elektrobetriebenes Transportsystem (1) aufweisend ein System zur Verwaltung des elektrischen Ladevorgangs mehrerer Module zur Speicherung elektrischer Energie, die in dem Transportsystem (1) verwendet werden, das dazu bestimmt ist, eine Strecke zurückzulegen, wobei das Transportsystem n Fahrzeuge aufweist, wobei n größer als oder gleich 1 ist, jedes Fahrzeug aufweisend:

- Wenigstens zwei Rollanordnungen (Ri_X);
- Wenigstens zwei Elektroantriebsanordnungen (Ei_X), die erste Elektroantriebsanordnung und zweite Elektroantriebsanordnung, die jeweils einer gesonderten Rollanordnung zugeordnet sind, jede Elektroantriebsanordnung umfassend:

o Wenigstens einen Elektromotor (MOTi_Y), um die Rollanordnung am Boden drehend anzutreiben;
o Wenigstens ein Modul (Mi_X) zur Speicherung elektrischer Energie, das dazu bestimmt ist, den Elektromotor mit elektrischer Energie zu versorgen, und mehrere Zellen zur Speicherung elektrischer Energie aufweist;

o Wenigstens einen bidirektionalen Spannungswandler (CONVi_Y), der angeordnet ist, die Übertragung elektrischer Energie zwischen dem Modul zur Speicherung elektrischer Energie und dem Elektromotor zu steuern;

- Wobei das Modul zur Speicherung elektrischer Energie der ersten Elektroantriebsanordnung keine elektrische Leistungsverbindung mit dem Modul zur Speicherung elektrischer Energie der zweiten Elektroantriebsanordnung aufweist;

Wobei das Verwaltungssystem Verarbeitungsmittel umfasst, die angeordnet sind, einen elektrischen Ladezustand zu bestimmen, der auf jedes Modul zur Speicherung elektrischer Energie anzuwenden ist, aufweisend:

- Einen Block zum Bestimmen eines gesamten Soll-Ladezustands (SOCcible_T), der für Gesamtheit der Speicherungsmodule zu erreichen ist, damit das Transportsystem die Strecke in völliger elektrischer Autonomie zurücklegt, unter Berücksichtigung einer elektrischen Beanspruchung beim Laden und Entladen der Module, die durch den Betrieb des Transportsystems auf der Strecke hervorgerufen wird;
- Einen Block zum Bestimmen eines zu erreichenden Ladezustands (SOC_Mi_X) für jedes Speicherungsmodul des Transportsystems, wobei dieser Ladezustand für jedes Modul in Abhängigkeit von Folgendem bestimmt wird:

◦ Vom bestimmten Soll-Ladezustand (SOCcible_T);
◦ Von der Umsetzung einer oder mehrerer Verwaltungsfunktionen am Modul zur Speicherung elektrischer Energie des Systems, wobei eine der einen oder mehreren Verwaltungsfunktionen aus einer Sequenz zum Spannungsausgleich der Zellen eines Moduls zur Speicherung elektrischer Energie besteht, die die Ladung des Moduls bis zu einem Ladezustand von 100 % erfordert.

**12.** System nach Anspruch 11, **dadurch gekennzeichnet, dass** der Ladezustand (SOC_Mi_X), der für jedes Modul zu erreichen ist, unter Berücksichtigung eines Verfügbarkeitsstands bestimmt wird, der dem Modul zur Speicherung elektrischer Energie auf der Strecke zugewiesen wird.

**13.** System nach Anspruch 11 oder 12, **dadurch gekennzeichnet, dass** der Ladezustand, der für wenigstens ein Speicherungsmodul zu erreichen ist, einem optimalen Ladezustand (SOCcible_Mi_X) entspricht, der anhand von Folgendem berechnet wird:

- Vom bestimmten gesamten Soll-Ladezustand (SOCcible_T);
- Von einer Anzahl von Modulen, die gemäß der umgesetzten Verwaltungsfunktion auf einen bestimmten Ladezustand zu laden sind, und vom Ladezustand, der diesen Modulen zugeteilt wird;
- Von der Gesamtzahl von Modulen des Systems.

14. System nach Anspruch 13, **dadurch gekennzeichnet, dass** der optimale Ladezustand (SOCcible_Mi_X) ebenfalls unter Berücksichtigung einer Anzahl von isolierten Modulen, das heißt, die weder am Ladevorgang noch am Antrieb des Transportsystems (1) beteiligt sind, bestimmt wird.

15. System nach Anspruch 14, **dadurch gekennzeichnet, dass** es Folgendes aufweist:

- Einen Testblock, der angeordnet ist, zu bestimmen, ob eine Durchführung einer Sequenz zum Spannungsausgleich der Zellen des elektrischen Moduls notwendig ist;
- Einen Block zur Steuerung eines Ladevorgangs bis zum bestimmten optimalen Ladezustand, wenn die Spannungsausgleichssequenz nicht durchgeführt werden soll;
- Einen Block zur Steuerung eines Ladevorgangs bis zu einem zweiten Ladezustand gleich 100 % und einer Sequenz zum Spannungsausgleich der Zellen, wenn dieser zweite Ladezustand erreicht ist, wenn die Ausgleichssequenz notwendig und akzeptiert ist.

16. System nach Anspruch 15, **dadurch gekennzeichnet, dass** der Testblock basierend auf wenigstens einem gespeicherten Entscheidungskriterium ausgeführt wird, das einen bestimmten Wert aufweist.

17. System nach Anspruch 16, **dadurch gekennzeichnet, dass** es Mittel zur Messung einer Spannung an den Anschlüssen der Zellen zur Speicherung elektrischer Energie des Moduls zur Speicherung elektrischer Energie aufweist, und dadurch, dass das Entscheidungskriterium auf Spannungsmessungen basiert, die mithilfe der Messmittel durchgeführt werden.

18. System nach einem der Ansprüche 15 bis 17, **dadurch gekennzeichnet, dass** es einen Testblock aufweist, der angeordnet ist, den Fortschritt der Sequenz zum Spannungsausgleich der Zellen des Moduls zur Speicherung elektrischer Energie zu bestimmen.

19. System nach Anspruch 15, **dadurch gekennzeichnet, dass** es einen Block zur Änderung des Werts des Entscheidungskriteriums aufweist, der nach dem Ende der Sequenz zum Spannungsausgleich der Zellen des Moduls zur Speicherung elektrischer Energie ausgeführt wird.

**Claims**

1. Method for managing the electrical charging of a plurality of electrical energy storage modules (Mi_X) that are used in an electrically powered transport system (1) that is intended to make a journey, said transport system including n vehicles, n being higher than or equal to 1, each vehicle including:

- at least two rolling assemblies (Ri_X);
- at least two electric drive assemblies (Ei_X), referred to as the first electric drive assembly and the second electric drive assembly, each of which is associated with a distinct rolling assembly, each electric drive assembly comprising:

  o at least one electric motor (MOTi_Y) for driving said rolling assembly over the ground in rotation;
  o at least one electrical energy storage module (Mi_X) that is intended to supply said electric motor with electrical power and that includes a plurality of electrical energy storage cells;
  o at least one bidirectional voltage converter (CONVi_Y) that is arranged to control the transfer of electrical energy between said electrical energy storage module and said electric motor;

- the electrical energy storage module of the first electric drive assembly having no electrical power connection with the electrical energy storage module of the second electric drive assembly;

said method comprising:

- a step of determining an overall target state of charge (SOCcible_T) to be reached for all of the storage modules so that the transport system makes said journey completely electrically autonomously and accounting for an electrical demand for charging and discharging the electrical energy storage modules resulting from the operation of the transport system over said journey;
- a step of determining, for each storage module of the transport system, a state of charge (SOC_Mi_X) to be reached, this state of charge being determined for each module according to:

  o the determined target state of charge (SOCcible_T);

o the implementation of one or more management functions on the electrical energy storage module of the system, one of said one or more management functions consisting of a sequence of voltage-balancing the cells of an electrical energy storage module that requires the module to be charged to a state of charge of 100%.

2. Method according to Claim 1, **characterized in that** the state of charge (SOC_Mi_X) is also determined by accounting for a state of availability that is assigned to the electrical energy storage module over the journey.

3. Method according to Claim 1 or 2, **characterized in that** the state of charge to be reached for at least one storage module corresponds to an optimal state of charge (SOCcible_Mi_X) which is calculated from:

   - the determined overall target state of charge (SOCcible_T);
   - a number of modules to be charged to a particular state of charge according to said implemented management function and the state of charge that is assigned to these modules;
   - the total number of modules of the system.

4. Method according to Claim 3, **characterized in that** said optimal state of charge is also determined by accounting for a number of modules that are isolated, i.e. that do not participate in charging or in driving said transport system (1).

5. Method according to Claim 1, **characterized in that** it includes:

   - a test step (E10) for determining whether a sequence of voltage-balancing the cells of said electrical module is required;
   - a step (E20') of controlling an operation of charging the electrical energy storage module to said determined optimal state of charge, if said voltage-balancing sequence does not have to be implemented;
   - a step (E40) of controlling an operation of charging the electrical energy storage module until a second state of charge that is equal to 100% is reached and a sequence of voltage-balancing the cells once this second state of charge has been reached if said balancing sequence is required and accepted.

6. Method according to Claim 5, **characterized in that** the test step (E10) is implemented on the basis of at least one stored decision criterion having a determined value.

7. Method according to Claim 6, **characterized in that** the test step (E10) includes a step of measuring the voltage across the terminals of the electrical energy storage cells of the electrical energy storage module.

8. Method according to one of Claims 5 to 7, **characterized in that** it includes a step (E50) of checking a state of progress of the sequence of voltage-balancing the cells of the electrical energy storage module.

9. Method according to Claim 8, **characterized in that** it includes a step (E70) of holding the decision criterion at its determined value for as long as the balancing sequence is yet to be completed.

10. Method according to Claim 8 or 9, **characterized in that** it includes a step (E60) of modifying said value of the decision criterion, implemented after the end of the sequence of voltage-balancing the cells of the electrical energy storage module.

11. Electrically powered transport system (1) comprising a system for managing the electrical charging of a plurality of electrical energy storage modules that are used in the transport system (1) that is intended to make a journey, said transport system including n vehicles, n being higher than or equal to 1, each vehicle including:

   - at least two rolling assemblies (Ri_X);
   - at least two electric drive assemblies (Ei_X), referred to as the first electric drive assembly and the second electric drive assembly, each of which is associated with a distinct rolling assembly, each electric drive assembly comprising:

     o at least one electric motor (MOTi_Y) for driving said rolling assembly over the ground in rotation;
     o at least one electrical energy storage module (Mi_X) that is intended to supply said electric motor with electrical power and that includes a plurality of electrical energy storage cells;
     o at least one bidirectional voltage converter (CONVi_Y) that is arranged to control the transfer of electrical energy between said electrical energy storage module and said electric motor;

   - the electrical energy storage module of the first electric drive assembly having no electrical power connection with the electrical energy storage module of the second electric drive assembly;

said management system comprising processing means that are arranged so as to determine an electrical state of charge to be applied to each electrical energy storage module, comprising:

- a block for determining an overall target state of charge (SOCcible_T) to be reached for all of the storage modules so that the transport system makes said journey completely electrically autonomously and accounting for an electrical demand for charging and discharging the modules resulting from the operation of the transport system over said journey;
- a block for determining, for each storage module of the transport system, a state of charge (SOC_Mi_X) to be reached, this state of charge being determined for each module according to:

  o the determined target state of charge (SOCcible_T);
  o the implementation of one or more management functions on the electrical energy storage module of the system, one of said one or more management functions consisting of a sequence of voltage-balancing the cells of an electrical energy storage module that requires the module to be charged to a state of charge of 100%.

12. System according to Claim 11, **characterized in that** the state of charge (SOC_Mi_X) to be reached for each module is determined by accounting for a state of availability that is assigned to the electrical energy storage module over the journey.

13. System according to Claim 11 or 12, **characterized in that** the state of charge to be reached for at least one storage module corresponds to an optimal state of charge (SOCcible_Mi_X) which is calculated from:

  - the determined overall target state of charge (SOCcible_T);
  - a number of modules to be charged to a particular state of charge according to said implemented management function and the state of charge that is assigned to these modules;
  - the total number of modules of the system.

14. System according to Claim 13, **characterized in that** said optimal state of charge (SOCcible_Mi_X) is also determined by accounting for a number of modules that are isolated, i.e. that do not participate in charging or in driving said transport system (1).

15. System according to Claim 14, **characterized in that** it includes:

  - a test block that is arranged so as to determine whether an operation of implementing a sequence of voltage-balancing the cells of said electrical module is required;
- a block for controlling a charging operation until said determined optimal state of charge is reached, if said voltage-balancing sequence does not have to be implemented;
- a block for controlling a charging operation until a second state of charge that is equal to 100% is reached and a sequence of voltage-balancing the cells once this second state of charge has been reached if the balancing sequence is required and accepted.

16. System according to Claim 15, **characterized in that** the test block is run on the basis of at least one stored decision criterion having a determined value.

17. System according to Claim 16, **characterized in that** it includes means for measuring the voltage across the terminals of the electrical energy storage cells of the electrical energy storage module and **in that** said decision criterion is based on voltage measurements made by said measurement means.

18. System according to one of Claims 15 to 17, **characterized in that** it includes a test block that is arranged so as to determine the state of progress of the sequence of voltage-balancing the cells of the electrical energy storage module.

19. System according to Claim 15, **characterized in that** it includes a block for modifying said value of the decision criterion, run after the end of the sequence of voltage-balancing the cells of the electrical energy storage module.

**Fig. 1**

M1_1  M2_1  M3_1        V1        V2        1        V3

M1_2  M2_2  M3_2

**Fig. 2**

Vi

Ri_1        10

Ri_10        Ri_11

MOTi_10   MOTi_11

Ei_1        Ei_2

CONVi_10  CONVi_11

Mi_1        Mi_2

CONVi_20  CONVi_21

MOTi_20   MOTi_21

Ri_20        Ri_21

30        Ri_2        20

**Fig. 3**

Mi_1

Ei_1

Ch_Mi_1

AC / DC

CONVi_10
DC / AC

MOTi_10

CONVi_11
DC / AC

MOTi_11

DC / DC

AUX1_Mi_1

C_Mi_1

U_Mi_1

**Fig. 4**

Ei_1

Mi_1

AUX2_Mi_1

CONVi_10
DC / AC

MOTi_10

AC / DC

Ch_Mi_1

CONVi_11
DC / AC

MOTi_11

DC / DC

AUX1_Mi_1

C_Mi_1

U_Mi_1

**Fig. 5**

M1_1

M1_2

M2_1

M2_2

AUX

*Fig. 6*

EP 3 562 704 B1

**Fig. 7**

**Fig. 8**

| | Eq | P1 | P2 | Cy | Is |
|---|---|---|---|---|---|
| M1_1 | x | x | x | | |
| M1_2 | | x | x | | |
| M2_1 | | x | | | |
| M2_2 | | x | | x | |
| Mn_1 | | x | x | | |
| Mn_2 | | | | | x |

21

**Fig. 9**

E10 — Equilibrage ?
— non → E20' — Charge SOCcible_Mi_X
— oui ↓

E20 — Envoi demande équilibrage à UC1
↓

E30 — Demande équilibrage acceptée ?
— non → E30' — Charge SOCcible_Mi_X
— oui ↓

E40 — Charge SOC=100% +équilibrage
↓

E50 — Equilibrage terminé ?
— non ↓ → E70 — Conservation critère équilibrage
— oui → E60 — RAZ critère d'équilibrage

**EP 3 562 704 B1**

## RÉFÉRENCES CITÉES DANS LA DESCRIPTION

**Documents brevets cités dans la description**

- FR 3024703 A1

- US 20150251648 A1